Europäisches Patentamt

(19) European Patent Office     (11) Publication number:     **0 223 847**

Office européen des brevets     **B1**

(12) **EUROPEAN PATENT SPECIFICATION**

(45) Date of publication of patent specification: 30.01.91     (51) Int. Cl.⁵: **C 08 F 283/02,** C 08 K 5/02,
C 08 L 69/00

(21) Application number: 86903958.6

(22) Date of filing: 02.06.86

(86) International application number:
PCT/US86/01211

(87) International publication number:
**WO 86/07367 18.12.86 Gazette 86/27**

(54) **AN IGNITION RESISTANT CARBONATE POLYMER COMPOSITION CONTAINING A POLYETHER POLYOL-METAL SALT COMPLEX.**

(30) Priority: 03.06.85 US 740666

(43) Date of publication of application:
03.06.87 Bulletin 87/23

(45) Publication of the grant of the patent:
30.01.91 Bulletin 91/05

(84) Designated Contracting States:
AT BE DE FR GB IT NL

(56) References cited:
US-A-3 891 599
US-A-4 146 524
US-A-4 200 701
US-A-4 439 566

Journal of Polymer Science Part A-4, vol. 4,
pages 1563-1577, issued 1966. (New York, New
York), R.D. LUNDBERG ET AL "Interactions of
Inorganic Salt s with Polyethylene oxide)," See
pages 1564 and 1565"

(73) Proprietor: **THE DOW CHEMICAL COMPANY**
2030 Dow Center Abbott Road P.O. Box 1967
Midland Michigan 48640-1967 (US)

(72) Inventor: **OGOE, Samuel, A.**
308 Linden Street
Angleton, TX 77515 (US)
Inventor: **DICK, Kevin, F.**
525 Sycamore Street
Lake Jackson, TX 77566 (US)

(74) Representative: **Casalonga, Axel et al**
BUREAU D.A. CASALONGA - JOSSE
Morassistrasse 8
D-8000 München 5 (DE)

**Description**

This invention relates to ignition resistant carbonate polymer compositions containing one or more polyether polyol-metal salt complexes.

Polyether polyols are well known from Polyurethanes Chemistry and Technology, Part I by J. H. Saunders and K. C. Frisch (1962) pages 32—43.

Metal salt complexes of these polyether polyols are known from U.S. Patent 4,200,701 and Lundberg et al. J. of Polymer Science Part A-1, Vol. 4, pgs. 1563—1577 (1966).

Ignition resistant polycarbonates made with crown ether salts are known from U.S. Patent 4,439,566. However, these crown ethers have the disadvantage that they are too expensive and toxic to be of any practical value.

The invention is an ignition resistant carbonate polymer composition containing from 0.001 to 10 weight percent based on the weight of the carbonate polymer of a polyether polyol-metal salt complex wherein said metal salt consists of an alkali metal or alkaline earth metal cation with the sodium or potassium metal salts being preferred, and a halogen-containing anion and wherein said polyether polyol is a block or random copolymer derived from alkylene oxides having from 2 to 4 carbon atoms and has a weight average molecular weight from 1,000 to 50,000.

The carbonate polymers employed in the present invention are aromatic carbonate polymers such as the trityl diol carbonates described in U.S. Patents 3,036,036; 3,036,037; 3,036,038; and 3,036,039, polycarbonates of bis(ar-hydroxyphenyl)-alkylidenes (often called bisphenol-A type diols) including their aromatically and aliphatically substituted derivatives such as disclosed in U.S. Patents 2,999,835; 3,038,365; and 3,334,154, and carbonate polymers derived from other aromatic diols such as described in U.S. Patent 3,169,121.

It is understood, of course, that the polycarbonate may be derived from (1) two or more different dihydric phenols or (2) a dihydric phenol and a glycol or a hydroxy- or acid-terminated polyester or a dibasic acid in the event a carbonate copolymer or interpolymer rather than a homopolymer is desired. Also suitable for the practice of this invention are blends of any one of the above carbonate polymers. Also included in the term "carbonate polymer" are the ester/carbonate copolymers of the types described in U.S. Patents 3,169,121; 4,287,787; 4,156,069; 4,260,731; and 4,105,633. Of the aforementioned carbonate polymers, the polycarbonates of bisphenol-A and derivatives, including copolycarbonates of bisphenol-A, are preferred. Methods for preparing carbonate polymers for use in the practice of this invention are well known, for example, several suitable methods are disclosed in the aforementioned patents.

The ignition resistant carbonate polymer compositions of the present invention are suitably preferred by combining the carbonate polymer with from 0.001 to 10 weight percent of the polyether polyol-metal salt complexes using any of a variety of blending procedures conventionally employed for incorporating additives into carbonate polymer resins. For example, dry particulates of the carbonate polymer and the complex can be blended and the resulting blend extruded into the desired shape.

If greater ignition resistance is desired, a monomeric or polymeric halogenated aromatic compound may be incorporated in the polycarbonate/polyether polyol-metal salt complex composition.

Useful monomeric bromo and/or chloro halogenated aromatic compounds are halogenated diphenyl sulfone, diphenyl, diphenyl oxide, benzene, phthalimide, and mixtures thereof. These compounds can be mono or poly halogenated with bromine or chlorine atoms. Bromide compounds are preferred since they cause less degradation of the polycarbonate and appear to be more efficient as ignition retardants.

Useful polymeric bromo and/or chloro halogenated aromatic compounds are oligomeric and polymeric polycarbonates derived from phosgene and a halogenated bisphenol A with or without bisphenol A. Thus, homopolymers and copolymers are useful in this invention. These oligomeric and polymeric halogenated polycarbonates are preferred since the final composition is transparent with little haze.

The amount of the halogenated organic compound used herein is not critical provided that the final halogen content of the polymer composition is in the range from 0.01 to 10 percent by weight, preferably from 0.1 to 1.0 percent by weight. It is to be understood that one can use relatively small amount of a highly halogenated aromatic compound or a relatively large amount of a sparsely halogenated compound to achieve the above desired ranges.

Preferred amounts of the polyether polyol-metal salt complex are in the range from 0.005 to 2 weight percent, based on the weight of the carbonate polymer.

The polyether polyols useful in this invention are well known from the Encyclopedia of Chemical Technology, Vol. 18, (1982), pages 616—645. Examples of useful polyether polyols are block or random polyols prepared from alkylene oxides having from 2 to 4 carbon atoms, such as ethylene oxide, propylene oxide, or butylene oxide.

A preferred class of useful polyether polyols are the homopolymers of alkylene oxides having from 2 to 3 carbon atoms, such as ethylene oxide or propylene oxide, and having a weight average molecular weight from 1,000 to 10,000.

The metal salts useful in this invention are the alkali metal or alkaline earth metal salts of halogen-containing anions such as $Cl^-$, $Br^-$, $I^-$, $BF_4^-$, $TiF_6^{-2}$, $SbF_6^-$, $SiF_6^{-2}$, and $ZrF_6^{-2}$. The preferred metal salts are those containing alkali metals such as sodium and potassium and halide ions such as chloride and bromide.

In addition to the aforementioned ignition resistant additives, other additives can be included in the carbonate polymer composition of the present invention such as fillers (i.e., a tetrafluoroethylene polymer or glass fibers), pigments, dyes, antioxidants, heat stabilizers, ultraviolet light absorbers, mold release agents and other additives commonly employed in carbonate polymer compositions.

The following examples are given to further illustrate the invention. In the following examples, all parts and percentages are by weight unless otherwise indicated.

Preparation of Polyol-Metal Salt Complexes A, B, C, D, E

Polyether polyol-metal salt complexes A, B, C, D and E were prepared from sodium bromide or potassium bromide and one of three polyether polyols F, G or H. Polyol F is a glycerine-initiated polyoxypropylene polyether capped with 15 percent ethylene oxide. Polyol F had a weight average molecular weight of 4,857. Polyol G is a glycerine-initiated polyoxypropylene polyether capped with 14 percent ethylene oxide. Polyol G had a weight average molecular weight of 6,000. Polyol H is a polyoxyethylene glycol having a weight average molecular weight of 8,000. The complexes were prepared by first adding 5 grams of sodium or potassium bromide to 5 grams of methyl alcohol with shaking. After a complete solution was obtained, 5 grams of one of the polyether polyols was added with shaking. After a clear solution was obtained, 5 grams of water was added and the mixture was placed in a mechanical shaker overnight. A clear solution resulted. For complexes A, B, C, D and E, the metal salt and the polyether polyols employed are as follows:

| Complex | Metal Salts | Polyether Polyol |
|---------|-------------|------------------|
| A | NaBr | F |
| B | NaBr | G |
| C | KBr | F |
| D | NaBr | H |
| E | KBr | H |

Examples 1 Through 16 and Comparative Runs I, J, K and L

For Examples 1 through 16, polyether polyol-metal salt complexes A through E were incorporated into a heat stabilized bisphenol A polycarbonate having an average molecular weight of 31,000. The polycarbonate was stabilized with an aromatic diphosphonite compound described in U.S. Patent 3,825,629 and an alkyl ester of a carboxylic acid containing an alkylhydroxyphenyl group described in U.S. Patent 3,330,859. A mixture of the complex and the polycarbonate are first blended together for 5 minutes in a mechanical shaker. The blended mixture is then extruded into pellets on a vented twin screw extruder at 550°F (287.8°C. The extruded pellets were injection molded at 575°F (301.7°C) into 1/8 inch (3.1 mm) bars and disks for measurement of ignition resistance using the standard UL—94 Test procedure. Yellowness index, percent transmittance and percent haze were measured using a color difference meter.

Examples 11—16 additionally contain varying amounts of a tetrabromobisphenol A polycarbonate oligomer containing 50 percent by weight bromine. This material was added to the polycarbonate resin before it was extruded and molded.

Comparative Run I was the heat stabilized polycarbonate without any polyether polyol-metal salt complex. For Comparative Run J, 0.03 percent sodium bromide crystals was added to the polycarbonate. For Comparative Run K, 0.03 percent of polyol F was added to the polycarbonate. For Comparative Run L, 0.03 percent of the polyol in methanol was added to the polycarbonate.

The compositions of Comparative Runs I, J, K and L and Examples 1—16 and the properties measured in each composition are given in Table I.

TABLE I

## Examples and Comparative Runs

| Composition | I | J | K | L | 1 | 2 | 3 | 4 | 5 | 6 | 7 | 8 |
|---|---|---|---|---|---|---|---|---|---|---|---|---|
| Complex | -- | -- | -- | -- | A | A | B | B | C | C | A | A |
| amount, % | -- | -- | -- | -- | 0.03 | 0.05 | 0.03 | 0.05 | 0.1 | 0.5 | 0.1 | 0.5 |
| Amount Oligomer, % | -- | -- | -- | -- | -- | -- | -- | -- | -- | -- | -- | -- |
| **Properties** | | | | | | | | | | | | |
| Average Burn Time, sec. | 4.5 | 3.9 | 11.9 | 9.8 | 1.6 | 2.0 | 2.2 | 2.5 | 3.5 | 1.6 | 2.0 | 1.8 |
| No Drips | 5/5 | 5/5 | 5/5 | 5/5 | 0/5 | 0/5 | 0/5 | 0/5 | 0/5 | 0/5 | 0/5 | 0/5 |
| UL-94 Rating | V-2 | V-2 | V-2 | V-2 | V-0 | V-0 | V-0 | V-0 | V-0 | V-0 | V-0 | V-0 |
| Yellowness Index | 2.9 | 3.0 | 2.4 | 2.3 | 2.6 | 2.9 | 2.8 | 3.7 | 2.9 | 4.1 | 3.2 | 4.2 |
| Transmittance, % | 89.0 | 89.0 | 90.8 | 90.9 | 90.8 | 90.6 | 90.5 | 89.6 | 90.5 | 89.6 | 90.5 | 88.9 |
| Haze, % | 2.2 | 5.0 | 1.2 | 1.3 | 1.7 | 1.9 | 2.4 | 3.1 | 1.7 | 7.0 | 2.5 | 10.1 |

## Examples (Con't)

| Composition | 9 | 10 | 11 | 12 | 13 | 14 | 15 | 16 |
|---|---|---|---|---|---|---|---|---|
| Complex | D | E | D | E | C | C | A | A |
| amount, % | 0.5 | 0.5 | 0.5 | 0.5 | 0.1 | 0.5 | 0.1 | 0.5 |
| Amount Oligomer, % | -- | -- | 1.0 | 1.0 | 0.6 | 1.0 | 0.6 | 1.0 |
| **Properties** | | | | | | | | |
| Average Burn Time, sec. | 1.8 | 1.9 | 0.8 | 0.6 | 1.8 | 0.8 | 1.4 | 1.0 |
| No Drips | 0/5 | 0/5 | 0/5 | 0/5 | 0/5 | 0/5 | 0/5 | 0/5 |
| UL-94 Rating | V-0 | V-0 | V-0 | V-0 | V-0 | V-0 | V-0 | V-0 |
| Yellowness Index | 4.6 | 4.2 | 4.5 | 4.1 | 3.0 | 4.5 | 3.5 | 4.6 |
| Transmittance, % | 88.3 | 89.0 | 88.2 | 89.5 | 89.0 | 88.3 | 90.0 | 88.7 |
| Haze, % | 10.7 | 2.9 | 10.8 | 2.96 | 2.0 | 7.2 | 2.7 | 10.2 |

EP 0 223 847 B1

The data in Table I demonstrates that the addition of between 0.03 and 0.5 percent of Complex A, B, C, D or E will result in a polycarbonate composition having an average burn time between 1.6 and 3.5 seconds, no flaming drips for 5 samples, and an Underwriters' Laboratory Bulletin No. 94 (UL—94) rating of V—O. Comparative runs not containing the complex had higher average burn times, each sample had flaming drips and a UL—94 rating of V—2. The addition of between 0.6 and 1.0 percent brominated polycarbonate oligomer significantly decreased the average burn time when compared with the sample containing the same amount of polyether polyol-metal salt complex but no brominated polycarbonate oligomer.

The incorporation of polyether polyol-metal salt complexes into a polycarbonate resin is shown to have no adverse on the optical properties. Examples 1—4 with from 0.03 to 0.05 percent complexes A or B exhibit low color (yellowness index), high percent transmittance, and low percent haze.

**Claims**

1. An ignition resistant carbonate polymer composition comprising a carbonate polymer and from 0.001 to 10 weight percent based on the weight of the carbonate polymer of a polyether polyol-metal salt complex wherein said metal salt consists of an alkali metal or alkaline earth metal cation and a halogen-containing anion and wherein said polyether polyol is a block or random copolymer derived from alkylene oxides having from 2 to 4 carbon atoms and has a weight average molecular weight from 1,000 to 50,000.

2. The composition of claim 1 wherein said polyol is a homopolymer of alkylene oxides having from 2 to 3 carbon atoms, said polyol having a weight average molecular weight from 1,000 to 10,000.

3. The composition of claim 1 or 2 wherein said metal salt is a sodium of potassium halide.

4. The composition of any of claims 1 to 3, wherein the halide anion is chloride or bromide.

5. The composition of any of claims 1 to 4 which additionally contains a monomeric or polymeric halogenated aromatic compound.

6. The composition of claim 5 wherein the amount of said aromatic compound is such that the final aromatic halogen content in said composition is from 0.01 to 10 percent by weight.

7. The composition of any of claims 1 to 6 wherein the carbonate polymer is an aromatic carbonate polymer selected from the group comprising trityl diol carbonates, polycarbonates of bis (ar-hydroxyphenyl) alkylidenes or polycarbonates of bisphenol A type diols including their aromatically and aliphatically substituted derivatives and carbonate polymers derived from other aromatic diols.

8. The composition of any of claims 1 to 7 wherein the carbonate polymer is derived from two or more different dihydric phenols.

9. A process for preparing an ignition resistant carbonate polymer composition which comprises blending a carbonate polymer with from 0.001 to 10 weight percent of a polyether polyol-metal salt complex wherein said metal salt consists of an alkali metal or alkaline earth metal cation and a halogen containing anion and wherein said polyether polyol has a weight average molecular weight of from 1,000 to 50,000.

**Patentansprüche**

1. Entzündungsbeständige Zusammensetzung eines Carbonatpolymers, umfassend ein Carbonatpolymer und von 0,001 bis 10 Gew.-% auf Basis des Carbonatpolymer-Gewichts eines Polyetherpolyol-Metallsalz-Komplexes, worin das Metallsalz aus einem Alkalimetall- oder Erdalkalimetall-Kation und einem Halogen-haltigen Anion besteht, und worin das Polyetherpolyol ein Block- oder ungeordnetes Copolymer ist, das aus Alkylenoxiden mit 2 bis 4 Kohlenstoffatomen erhalten wird und eine relative Molekülmasse im Gewichtsmittel von 1000 bis 50000 besitzt.

2. Zusammensetzung nach Anspruch 1, worin das Polyol ein Homopolymer aus Alkylenoxiden mit 2 bis 3 Kohlenstoffatomen ist, wobei das Polyol eine relative Molekülmasse im Gewichtsmittel von 1000 bis 10000 besitzt.

3. Zusammensetzung nach Anspruch 1 oder 2, worin das Metallsalz ein Natrium- oder Kaliumhalogenid ist.

4. Zusammensetzung nach einem der Ansprüche 1 bis 3, worin das Halogenid-Anion Chlorid oder Bromid ist.

5. Zusammensetzung nach einem der Ansprüche 1 bis 4, das zusätzlich eine monomere oder polymere halogenierte aromatische Verbindung enthält.

6. Zusammensetzung nach Anspruch 5, worin der Anteil der aromatischen Verbindung so ist, daß der endgültige Gehalt an aromatischem Halogen in der Zusammensetzung von 0,01 bis 10 Gew.-% ist.

7. Zusammensetzung nach einem der Ansprüche 1 bis 6, worin das Carbonatpolymer ein aromatisches Carbonatpolymer ist, ausgewählt aus der Gruppe, umfassend Trityldiolcarbonate, Polycarbonate von Bis(ar-hydroxyphenyl)alkylidenen oder Polycarbonaten von Diolen des Typs Bisphenol A, einschließlich ihrer aromatisch und aliphatisch substituierten Derivate und Carbonatpolymere, die aus anderen aromatischen Diolen erhalten werden.

8. Zusammensetzung nach einem der Ansprüche 1 bis 7, worin das Carbonatpolymer von zwei oder mehr verschiedenen Phenolen mit zwei Hydroxylgruppen stammt.

5

9. Verfahren zur Herstellung einer entzündungsbeständigen Carbonatpolymer-Zusammensetzung, umfassend das Vermischen eines Carbonatpolymers mit von 0,001 bis 10 Gew.-% eines Polyetherpolyol-Metallsalz-Komplexes, worin das Metallsalz aus einem Alkalimetall- oder Erdalkalimetall-Kation und einem Halogen-haltigen Anion besteht, und worin das Polyetherpolyol ein Block- oder ungeordnetes Copolymer ist, das aus Alkylenoxiden mit 2 bis 4 Kohlenstoffatomen erhalten wird und eine relative Molekülmasse im Gewichtsmittel von 1000 bis 50000 besitzt.

## Revendications

1. Composition ignifuge de polycarbonate, comprenant un polycarbonate et de 0,001 à 10% en poids, par rapport au poids du polycarbonate, d'un complexe polyétherpolyol/sel métallique, dans lequel ledit sel métallique est constitué d'un cation de métal alcalin ou de métal alcalino-terreux et d'un anion halogéné, et dans lequel ledit polyéther-polyol est un copolymère statistique ou séquencé, dérivé d'oxydes d'alkylène comportant de 2 à 4 atomes de carbone, et présente une masse moléculaire moyenne en poids de 1000 à 50.000.

2. Composition de la revendication 1, dans laquelle ledit polyol est un homopolymère d'oxydes d'alkylène comportant de 2 à 3 atomes de carbone, ledit polyol ayant une masse moléculaire moyenne en poids de 1000 à 10.000.

3. Composition de la revendication 1 ou 2, dans laquelle ledit sel métallique est un halogénure de sodium ou de potassium.

4. Composition de l'une quelconque des revendications 1 à 3, dans laquelle l'anion halogénure est l'ion chlorure ou bromure.

5. Composition de l'une quelconque des revendications 1 à 4, qui contient en outre un composé aromatique halogéné monomère ou polymère.

6. Composition de la revendication 5, dans laquelle la quantité dudit composé aromatique est telle que la teneur finale en halogène aromatique de ladite composition vaut de 0,01 à 10% en poids.

7. Composition de l'une quelconque des revendications 1 à 6, dans laquelle le polycarbonate est un polycarbonate aromatique choisi dans le groupe comprenant les carbonates de trityl-diol, les polycarbonates de bis(ar-hydroxyphényl)-alkylidène ou les polycarbonates de diols du type bisphénol-A, y compris leurs dérivés substitués sur les fragments aromatiques ou aliphatiques, et les polycarbonates dérivés d'autres diols aromatiques.

8. Composition de l'une quelconque des revendications 1 à 7, dans laquelle le polycarbonate dérive de deux diphénols différents ou plus.

9. Procédé de préparation d'une composition ignifuge de polycarbonate, qui comprend le mélange d'un polycarbonate avec de 0,001 à 10% en poids d'un complexe polyéther-polyol/sel métallique, dans lequel ledit sel métallique est constitué d'un cation de métal alcalin ou de métal alcalino-terreux et d'un anion halogéné, et dans lequel ledit polyéther-polyol est un copolymère séquencé ou statistique, dérivé d'oxydes d'alkylène comportant de 2 à 4 atomes de carbone, et dont la masse moléculaire moyenne en poids vaut de 1000 à 50.000.